# EUROPEAN PATENT APPLICATION

(11) **EP 0 973 293 A2**
(43) Date of publication of application: **19.01.2000**
(21) Application number: 99305581.3
(22) Date of filing: 14.07.1999
(51) Int. Cl.: H04L 9/30

(54) **Public-key cryptography with increased protection against selective ciphertext attack**

(30) Priority: 16.07.1998 JP 20200598
(71) Applicant: NEC CORPORATION, Tokyo (JP); Ricoh System Kaihatsu Co. Limited, Tokyo (JP)
(72) Inventor: Shimada, Michio, c/o Nec Corporation, tokyo (JP); Yoshikawa, Hiroharu, Ricoh System Kaihatsu Co. Ltd, tokyo (JP)
(74) Representative: Moir, Michael Christopher

(57) **Abstract**

A method of public-key cryptography with increased protection against selective ciphertext attack is disclosed. An encrypting device encrypts a plaintext M to generate a ciphertext C using a public key N having as a value the product pq of a first secret key p of a prime number whose Jacobi symbol (2 | p) is -1 and a second secret key q of a prime number whose Jacobi symbol (2 | q) is 1. A decrypting device decrypts the ciphertext C using the secret keys p, q and the public key N to recover the original plaintext N. Since x where (x | p)(x | q) =-1 is not used, digital signatures generated by the decrypting device can not be broken by selective ciphertext attacks.

## Description

### BACKGROUND OF THE INVENTION

### 1. Field of the Invention:

The present invention relates to a method of, an apparatus for, and a system for public-key cryptography using a key for converting digital information into ciphertext as a public key and a key for decrypting ciphertext into original digital information as a secret key.

### 2. Description of the Related Art:

With the widespread use of the Internet and other networks, people often have opportunities to transmit various items of digital information via telephone lines to desired parties. If a person wants to send secret information securely to a destination via telephone lines, then the secret information needs to be protected against appropriation by a third party. Various methods of encrypting information have heretofore been proposed in order to provide protection against appropriation.

According to a basic method of cryptography, digital information to be transmitted is encrypted using an encrypting key, and the encrypted digital data is transmitted to a destination. At the destination, the encrypted digital data is decrypted into the original digital information using a decrypting key.

Hereinafter, a process of converting digital information into encrypted data and transmitting the encrypted data will be referred to as encryption, and a process of recovering the original digital information from the encrypted data as decryption. The digital information to be transmitted will be referred to as plaintext, and the encrypted data as ciphertext. Since digital information or data can be expressed by numerical values, digital information or data and numerical values which represent plaintext and ciphertext will be handled equally.

An encryption method which uses a single key as both encrypting and decrypting keys is referred to as sharing-key cryptography, whereas an encryption method which uses different keys as encrypting and decrypting keys, with the encrypting key being published as a public key and the decrypting key being kept secret as a private key, is referred to as public-key cryptography.

According to sharing-key cryptography, since the encrypting and decrypting keys are the same, both of them must be kept secret. According to public-key cryptography, however, a person who wants to transmit digital information to a destination uses the public key to encrypt the digital information into ciphertext, and transmits the ciphertext to the destination. At the destination, the receiver decrypts the ciphertext with its own private key. Public-key cryptography is advantageous in that anybody can generate ciphertext that can be decrypted by only a certain receiver without the need for the sender to communicate with the receiver about the private key.

A conventional public-key cryptography system will be described in detail below. Prior to describing the conventional public-key cryptography system, some mathematical basics necessary for its understanding will first be described briefly below. These mathematical details are covered in Chapter 1, Section 6, of Dorothy Elizabeth Robling Denning "Cryptography and Data Security", Addison-Wesley Publishing Company, Inc., 1982.

First, remainders will be described below. A remainder "r" produced when "a" is divided by N is called a remainder "r" of "a" with respect to N, and expressed as "a mod N = r". The fact that a remainder of "a" with respect to N is equal to a remainder of "b" with respect to N is expressed by "a = b(mod N)".

gcd(P, Q) represents the greatest common divisor of P and Q. (P | Q) represents the value of a Jacobi symbol of P with respect to Q. The Jacobi symbols are such that if P₁ = P₂(mod Q), then the equation (P₁ | Q) = (P₂ | Q) is satisfied and the equations (1 | P) = 1, (-1 | P) = -1, (P₁P₂|Q) = (P₁|Q)(P₂|Q), (P|Q₁Q₂) = (P|Q₁)(P|Q₂) are satisfied. Specific calculating methods for Jacobi symbols are described in detail in the above book. While a Jacobi symbol (P | Q) is usually defined only with respect to P and Q for gcd(P, Q) = 1, (P | Q) = 0 is defined with respect to P and Q for gcd(P, Q) ≠ 1 according to the present invention.

Extensions of the definition of Jacobi symbols are described in detail in H.C. Williams, "A Modification of the RSA Public-Key Encryption Procedure", IEEE Transactions on Information Theory, Vol. IT-26, No. 6, pp. 726 - 729, 1980.

A process of calculating extended Jacobi symbols will become clear from the description from page 106 of Denning's book, Williams' article, and the extensions of the definition of Jacobi symbols. Specifically, for calculating an extended Jacobi symbol (P | Q), an ordinary process of calculating Jacobi symbols is carried out while confirming the value of gcd (P, Q) and if it is found that gcd (P, Q) is not 1, then the normal calculating process is finished, and the calculated result is set to 0.

If there exists an integer "x" which satisfies x² = a(mod p), then "a" is called the quadratic residue of modulus p, and if there does not exist such an integer, then "a" is called the quadratic non-residue of modulus p. It is known that if "p" is a prime number, then the number of integers x which satisfy x² = a(mod p) is at most 2, and (a | p) = 1 if the solutions are different from each other, (a I p) = 0 if they are a multiple root, and (a I p) = -1 if there is no solution.

It is known that if N is the product of two prime numbers, then the number of integers x which satisfy x² = a(mod N) is at most 4, and (a | p) = 1 if there are four different solutions, (a I p) = 0, a ≠ 0 if there two different solutions, a = 0 if there is only one solution, and (a I p) = -1 if there is no solution.

Rabin encryption scheme has been known as a public-key cryptosystem. This encryption scheme is a cryptographic communication process proposed in M.O. Rabin, "Digitized signatures and public-key functions as intractable as factorization", MIT Lab. For Computer Science, Tech. Rep. LCS/TR212, Cambridge MA: MIT Lab. For Computer Science, 1979. Rabin encryption scheme is described in detail in page 128 of Denning' s book.

According to Rabin encryption scheme, prime numbers p, q are used as a secret key and N = pq as a public key, and encryption is performed according to C = M² mod N where M represents plaintext and C ciphertext. p, q, N, M, C are numbers ranging from several hundreds bits to one thousand and several hundreds bits. If N is a number ranging from several hundreds bits to one thousand and several hundreds bits, then factorizing N into prime numbers would practically be impossible because of the amount of calculations involved, and it is known that breaking a Rabin ciphertext would be as difficult as factorizing N into prime numbers.

For decrypting a ciphertext into a plaintext according to Rabin encryption scheme, a quadratic congruence expression x² = C(mod N) with respect to "x" may be solved. To solve this quadratic congruence expression, two quadratic congruence expressions x² = C(mod p), x² = C(mod q) are solved for "x". A process of calculating the solution to the above two quadratic congruence expressions is described in page 116 of Denning' s book. Once solutions xₚ, x_{q} to the two quadratic congruence expressions x² = C(mod p), x² = C(mod q) are found, a solution x_{N} to the quadratic congruence expression x² = C(mod N) can be found according to x_{N} = qbₚxₚ + pb_{q}x_{q} mod N where bₚ, b_{q} are values that satisfy qbₚ = 1(mod p), pb_{q} = 1(mod q). The fact that the solution x_{N} can be found in the manner described above can be confirmed by substituting the solution in the quadratic congruence expression.

Each of the solutions xₚ, x_{q} can have two values at maximum, and hence the solution x_{N} can have four values at maximum. It is known that the Jacobi symbol of C and the number of values that x_{N} can have (i.e., the number of solutions to the quadratic congruence expression x² = C(mod N), and the Jacobi symbol of x_{N} are related to each other as follows: If ((C I p), (C | q) = (0, 0), then the number of solutions is 1, and the Jacobi symbol of the solution x_{N} is ((x_{N} | p), (x_{N} | q)) = (0, 0). If ((C | p), (C | q) = (0, 1), then the number of solutions is 2, and the Jacobi symbol of the solution x_{N} takes two values represented by ((x_{N} | p), (x_{N} | q)) = (0, 1), (0, -1). If ((C | p), (C | q) = (1, 0), then the number of solutions is 2, and the Jacobi symbol of the solution x_{N} takes two values represented by ((x_{N} | p), (x_{N} | q)) = (1, 0), (-1, 0). If ((C I p), (C I q) = (1, 1), then the number of solutions is 4, and the Jacobi symbol of the solution x_{N} takes four values represented by ((x_{N} I p), (x_{N} | q)) = (1, 1), (-1, -1), (-1, 1), (1, -1).

As described above, Rabin encryption scheme has had a problem in that a maximum of four plaintexts are converted into one ciphertext C, and hence it has not been possible to recover a plaintext uniquely from a ciphertext. Heretofore, it has been customary to use an improved Rabin cryptosystem proposed in M. Shimada, "Another Practical Public-Key Cryptosystem", Electronic Letters, Vol. 28, No. 23, pp. 2146 - 2147, 5th November 1992. According to the proposed improved Rabin cryptosystem, a ciphertext C which takes a value of {0, 1, ···, N-1} is generated from a plaintext M which takes a value of {0, 1, ···, N-1} according to an operation C = t(M)u(M)M²(mod N) where t(M) is a function whose value is t(M) = -1 if M ≧ (N+1)/2 and t(M) = 1 otherwise, and u(M) is a function whose value is u(M) = 2 if (M | N) = -1 and u(M) = 1 otherwise. That such an encryption scheme is able to generate functions of one-to-one correspondence is described in the above article.

However, the improved Rabin cryptosystem is disadvantageous in that it is vulnerable to a selective ciphertext attack. Specifically, if four ciphertexts C, -C mod N, 2C mod N, and -2C mod N are decrypted with a public key with respect to a ciphertext C, then four solutions to the quadratic congruence expression x² = C(mod N) are obtained as respective corresponding plaintexts. When gcd(x₁-x₂, N) is calculated with respect to the solution x₁ for which (x₁ | N) = -1 and the solution x₂ for which (x₂|N) = 1, of those four solutions, the value of p or q is obtained as a greatest common divisor.

In ordinary cryptographic communications, it is impossible for a cryptanalyst to obtain such four plaintexts. In digital signatures where a decrypted result is publicly available to anybody, since a cryptanalyst can freely choose an input (corresponding to a ciphertext) to the decrypting device, the cryptanalyst can make a selective ciphertext attack. For this reason, the improved Rabin cryptosystem has been disadvantageous in that it cannot be used in combination with digital signatures.

### SUMMARY OF THE INVENTION

It is therefore an object of the present invention to provide a method of, an apparatus for, and a system for public-key cryptography which are capable of recovering a plaintext uniquely from one ciphertext and gaining increased protection against selective ciphertext attacks for thereby making them usable with digital signatures.

To accomplish the above object, a plaintext M is encrypted to generate a ciphertext C using a public key N having as a value the product pq of a first secret key p of a prime number whose Jacobi symbol (2 I p) is -1 and a second secret key q of a prime number whose Jacobi symbol (2 | q) is 1, according to the encrypting method, described below, and the generated ciphertext C is transmitted. The received ciphertext C is decrypted to recover the original plaintext M using the first secret key p, the second secret key q, and the public key N according to the decrypting method, described below.

First, the encrypting method will be described below. The value of a Jacobi symbol (M I N) of the plaintext M and the public key N is calculated. An output x is set to a value 2M which is twice the value of the plaintext M if the value of the Jacobi symbol (M | N) is "-1", and an output x is set to the plaintext M if the value of the Jacobi symbol (M|N) is other than "-1". Then, a remainder x² mod N produced when the square of the output x is divided by the public key N is calculated and an output y to set to the calculated remainder. 2y mod N which is a remainder when a multiple by 2 of the output y is divided by the public key N is calculated. The remainder 2y mod N is selected as an output z if the value of the Jacobi symbol (M|N) is "-1" and an output z is set to the output y if the value of the Jacobi symbol (M|N) is other than "-1". The public key N is shifted by one bit to the right and an output (N-1)/2 which is a value produced by shifting the public key N is calculated. -z mod N which is a remainder when a multiple by -1 of the output z is divided by the public key N is calculated. The output (N-1)/2 and the output z are compared with each other. The output z is selected and outputted as the ciphertext C if z ≦ (N- 1)/2, and the ciphertext C is set to the remainder -z mod N if z > (N-1)/2.

The decrypting method will be described below. The value of a Jacobi symbol (C I p) of the ciphertext C and the first secret key p is calculated, and the value of a Jacobi symbol (C I q) of the ciphertext C and the second secret key q is calculated. The product (C I p)(C I q) of the Jacobi symbol (C I p) and the Jacobi symbol (C I q) is calculated. An output s(C) is set to the Jacobi symbol (C I p) if the value of the Jacobi symbol (C I q) is "0" and an output s(C) is set to the Jacobi symbol (C I q) if the value of the Jacobi symbol (C I q) is other than "0". Then, -C mod N which is a remainder when a multiple by -1 of the value of the ciphertext C is divided by the public key N is calculated. An output z is set to the remainder -C mod N if the output s(C) is "-1" and an output z is set to the ciphertext C if the output s(C) is other than "-1". z/2 mod N which is a remainder when a multiple by 1/2 of the output z is divided by the public key N is calculated. An output y is set to the remainder z/2 mod N if the value of the product (C I p)(C I q) is "-1" and an output y is set to the output z if the value of the product (C I p)(C I q) is other than "-1". A solution which satisfies (x I p)(x I q) ≠ 1 and whose value is equal to or smaller than (N-1)/2 and a solution which satisfies (x | p)(x | q) ≠ 1 and whose value is equal to or greater than (N+1)/2, of the solutions to a quadratic congruence expression x² = y(mod N) with respect to x, are outputted as a first output x_{L} and a second output x_{G}, respectively, if the output y is other than "0", and "0" is outputted as the first output x_{L} and the second output x_{G} if the output y is "0". A quotient x_{G}/2 produced when the second output x_{G} is divided by 2 is calculated. The quotient x_{G}/2 is selected and outputted as the plaintext M if the value of the product (C I p)(C | q) is "-1" and the first output x_{L} is selected and outputted as the plaintext M if the value of the product (C I p)(C | q) is other than "-1".

Since x where (x I p)(x I q) = -1 is not used, digital signatures generated by the decrypting device will not be broken by selective ciphertext attacks. The plaintext M can uniquely be recovered from the ciphertext C because a plaintext and a ciphertext can be held in a one-to-one correspondence.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a block diagram of an encrypting device in a public-key cryptographic system according to the present invention;
Fig. 2 is a block diagram of a decrypting device in the public-key cryptographic system according to the present invention;
Fig. 3 is a flowchart of an operation sequence of the encrypting device shown in Fig. 1;
Fig. 4 is a flowchart of an operation sequence of the decrypting device shown in Fig. 2;
Fig. 5 is a diagram illustrative of a conversion carried out in step 310 shown in Fig. 3;
Fig. 6 is a diagram illustrative of a conversion carried out in step 320 shown in Fig. 3;
Fig. 7 is a diagram illustrative of a conversion carried out in step 330 shown in Fig. 3; and
Fig. 8 is a diagram illustrative of a conversion carried out in step 340 shown in Fig. 3.

### DETAILED DESCRIPTION OF THE PREFERRED EMBODIMENT

A public-key cryptographic system according to the present invention comprises an encrypting device for generating a ciphertext C from a plaintext M with a public key N and a decrypting device for reproducing the original plaintext M by decrypting the ciphertext C using secret keys p, q.

The secret keys p, q are a set of prime numbers which satisfy ((2 | p), (2 | q)) = (-1, 1), and the public key N is N = pq. (x I y) represents a Jacobi symbol of "x" with respect to "y", as described above.

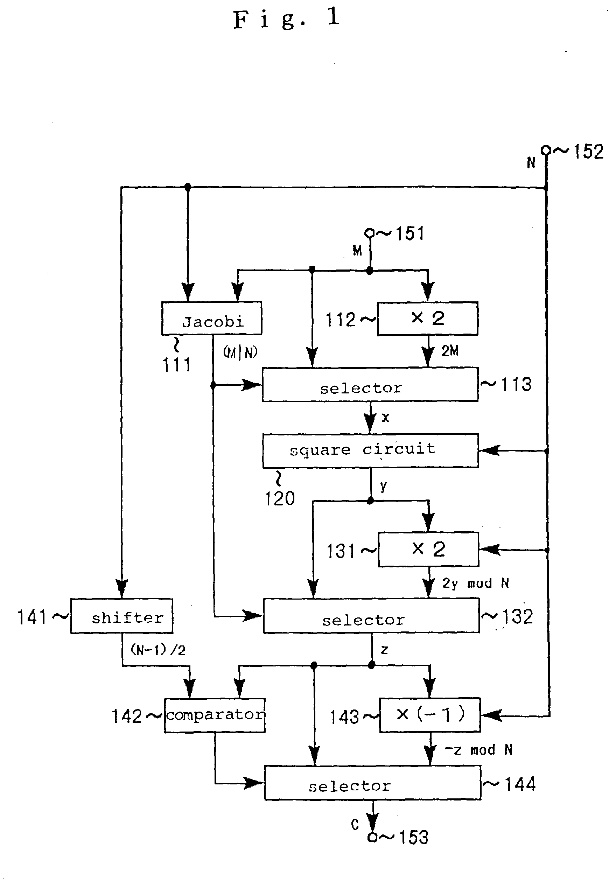

As shown in Fig. 1, the encrypting device comprises a Jacobi symbol calculating circuit 111, multipliers 112, 131, 143, selectors 113, 132, 144, a square circuit 120, a shifter 141, and a comparator 142.

A plaintext M is entered from an input terminal 151, and supplied to the Jacobi symbol calculating circuit 111, the selector 113, and the multiplier 112. A public key N is entered from an input terminal 151, and supplied to the Jacobi symbol calculating circuit 111, the shifter 141, the square circuit 120, the multiplier 131, and the multiplier 143. The Jacobi symbol calculating circuit 111 calculates the value of a Jacobi symbol (M|N), and supplies the calculated values to the selector 113 and the selector 132. The multiplier 112 multiplies the value of the plaintext M by 2, and outputs a multiplied result 2M. If (M | N) = -1, then the selector 113 selects and outputs the output from the multiplier 112, i.e., the multiplied result 2M. Otherwise, the selector 113 selects and outputs the plaintext M.

For illustrative purpose, the output from the selector 113 will hereinafter be represented by "x". The square circuit 120 calculates a remainder produced when the square of the output x from the selector 113 is divided by N, i.e., x² mod N, and outputs the calculated result. That is, the square circuit 120 performs the encryption of a Rabin ciphertext.

For illustrative purpose, the output from the square circuit 120 will hereinafter be represented by "y". The multiplier 131 calculates a remainder produced when a multiple by 2 of the output y from the square circuit 120 is divided by N, i.e., 2y mod N, and outputs the calculated result. If (M IN) = -1, then the selector 132 selects and outputs the output from the multiplier 131, i.e., the multiplied result 2y mod N. Otherwise, the selector 113 selects and outputs the output y of the square circuit 120. For illustrative purpose, the output from the selector 132 will hereinafter be represented by "z". The shifter 141 shifts N one bit to the right, and outputs the obtained value, i.e., (N-1)/2, (because the public key N is an odd number). The comparator 142 compares the output from the shifter 141, i.e., (N-1)/2, with the output z from the selector 132, and supplies the compared result to the selector 144. The multiplier 143 calculates a remainder produced when a multiple by -1 of the output z from the selector 132 is divided by N, i.e., -z mod N, and outputs the calculated result. Although -z mod N can be no other than (N-z) mod N, it will hereinafter be referred to as -z mod N.

If the output from the comparator 142 indicates z > (N-1)/2, then the selector 144 selects and outputs the output -z mod N from the multiplier 143. Otherwise, the selector 144 selects and outputs the output z from the selector 132. The output from the selector 144 is outputted as a ciphertext C from an output terminal 153.

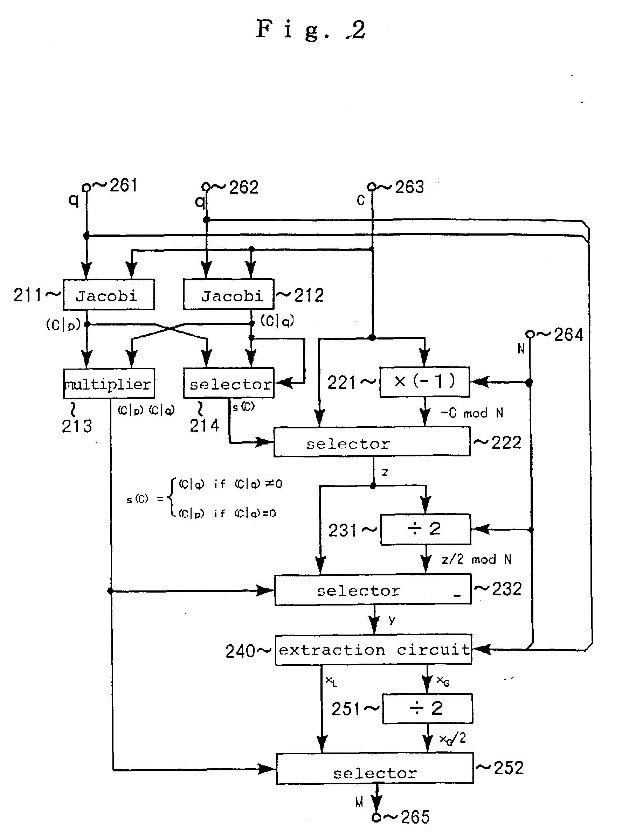

As shown in FIG. 2, the decrypting device comprises Jacobi symbol calculating circuits 211, 212, multipliers 213, 221, selectors 214, 222, 232, 252, and dividers 231, 251.

The ciphertext C is entered from an input terminal 263, and supplied to the Jacobi symbol calculating circuit 211, the Jacobi symbol calculating circuit 212, the selector 222, and the multiplier 221. The public key N is entered from an input terminal 264, and supplied to the multiplier 221, the divider 231, and an extraction circuit 240. A secret key p is entered from an input terminal 261, and supplied to the Jacobi symbol calculating circuit 211 and the extraction circuit 240. A secret key q is entered from an input terminal 262, and supplied to the Jacobi symbol calculating circuit 212 and the extraction circuit 240.

The Jacobi symbol calculating circuit 211 calculates the value of a Jacobi symbol (C I p), and supplies the calculated result to the multiplier 213 and the selector 214. The Jacobi symbol calculating circuit 212 calculates the value of a Jacobi symbol (C | q), and supplies the calculated result to the multiplier 213 and the selector 214. The multiplier 213 calculates the product of the Jacobi symbol (C I p) and the Jacobi symbol (C | q), and supplies the calculated result (C I p)(C I q) to the selector 232 and the selector 252. If the output (C I q) from the Jacobi symbol calculating circuit 212 is 0, then the selector 214 selects and outputs the output (C I p) from the Jacobi symbol calculating circuit 211. Otherwise, the selector 214 selects and outputs the output (C I q) from the Jacobi symbol calculating circuit 212.

For illustrative purpose, the output from the selector 214 will hereinafter be referred to as s(C). The output s(C) from the selector 214 is s(C) = (C I p) if (C | q) = 0, and s(C) = (C | q) if (C | q) ≠ 0. The multiplier 221 calculates a remainder produced when a multiple by -1 of the ciphertext C is divided by N, i.e., -C mod N, and outputs the calculated result. Although -C mod N is no other than (N-C) mod N, it will hereinafter be referred to as -C mod N. If the output s(C) from the selector 214 is -1, then the selector 222 selects and outputs the output from the multiplier 221, i.e., -C mod N. Otherwise, the selector 222 selects and outputs the ciphertext C.

For illustrative purpose, the output from the selector 222 will hereinafter be referred to as "z". The divider 231 calculates a remainder z/2 mod N produced when a multiple by 1/2 of the output z is divided by the public key N, and outputs the calculated result. Dividing the multiple by 1/2 of the output z by the public key N means that if the output z is an even number, then the output z is divided by 2, and if the output z is an odd number, then the output z is divided by the sum of the output z and the public key N.

If the output (C I p)(C I q) from the multiplier 213 is -1, then the selector 232 selects and outputs the output from the divider 231, i.e., z/2 mod N. Otherwise, the selector 232 selects and outputs z.

For illustrative purpose, the output from the selector 232 will hereinafter be referred to as "y". The extraction circuit 240 determines solutions to the quadratic congruence expression x² = C(mod N) with respect to x, and outputs those which satisfy (x | p)(x | q) ≠ -1 of the solutions (the number of those solutions is 2 at most). Of the outputted solutions, the solution whose value is (N-1)/2 or less is represented by x_{L}, and the solution whose value is (N+1)/2 or more by x_{G}. If y = 0, then since there is only one solution to x² = C(mod N), i.e., x = 0, the solutions are x_{L} = x_{G} = 0.

The divider 251 calculates a quotient produced when the output x_{G} from the square circuit 240 is divided by 2, i.e., x_{G}/2, and outputs the calculated result. If the output (C | p)(C | q) from the multiplier 213 is -1, then the selector 252 selects and outputs the output from the divider 251, i.e., x_{G}/2. Otherwise, the selector 252 selects and outputs x_{L}. The output from the selector 252 is outputted as a plaintext M from an output terminal 265.

Specific arrangements of the multipliers 112, 131, 143, 221, and the dividers 231, 251 will not be described in detail below as they can readily be understood based on a rudimentary knowledge of mathematics and logic circuits and hence are obvious to those skilled in the art, and specific arrangements of the Jacobi symbol calculating circuits 111, 211, 212 and the extraction circuit 240 will not be described in detail as they are identical to those used in conventional encrypting and decrypting devices and hence are obvious to those skilled in the art.

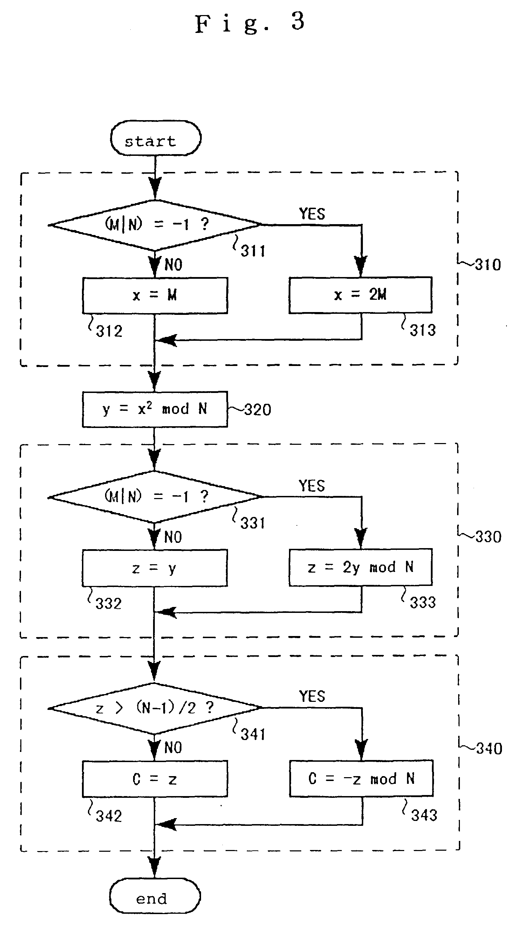

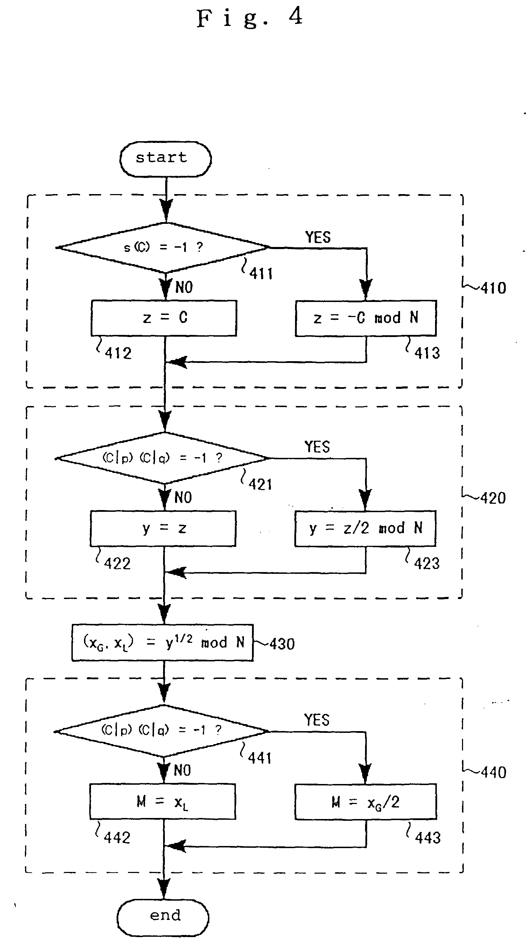

Operation of the public-key cryptographic system according to the present invention will be described below with reference to Figs. 3 and 4.

Fig. 3 is illustrative of an operation sequence of the encrypting device shown in Fig. 1.

In step 311, the Jacobi symbol calculating circuit 111 calculates the value of a Jacobi symbol (M|N) using the plaintext M. If the value of the Jacobi symbol (M|N) is -1, then control goes to step 313. Otherwise, control goes to step 312. The selector 113 operates based on the value of the Jacobi symbol (M|N) to set x to x = M in step 312 and set x to x = 2M in step 313. Hereinafter, steps 311, 312, 313 will collectively be referred to as step 310.

In step 320, the square circuit 120 sets y to y = x² mod N. Then, the selector 113 operates based on the value of the Jacobi symbol (M I N). If the value of the Jacobi symbol (M|N) is -1 in step 331, then control goes to step 333. Otherwise, control goes to step 332. In step 332, the selector 113 sets z to z = y. In step 333, the selector 113 sets z to z = 2 mod N. Hereinafter, steps 331, 332, 333 will collectively be referred to as step 330.

In step 341, the comparator 142 compares the output (N-1)/2 from the shifter 141 with z. The selector 144 operates based on the compared result from the comparator 142. If z > (N-1)/2, then control goes to step 343. Otherwise, control goes to step 342. In step 342, the selector 144 sets C to C = z. In step 343, the selector 144 sets C to C = -z mod N. The selector 144 outputs C as a ciphertext. Hereinafter, steps 341, 342, 343 will collectively be referred to as step 340.

Fig. 4 is illustrative of an operation sequence of the decrypting device shown in Fig. 2.

In step 411, the selector 222 operates based on the output s(C) from the selector 214. If s(C) is -1, then control goes to step 413. Otherwise, control goes to step 412. s(C) is a value defined as s(C) = (C | p) if (C | q) = 0 and s(C) = (C | q) if (C | q) ≠ 0. In step 412, the selector 222 sets z to z = C. In step 413, the selector 222 sets z to z = -C mod N. Hereinafter, steps 411, 412, 413 will collectively be referred to as step 410.

In step 421, the selector 232 operates based on the product (C I p)(C I q) of the Jacobi symbols, outputted from the multiplier 213. If (C I p)(C | q) is -1, then control goes to step 423. Otherwise, control goes to step 422. In step 422, the selector 232 sets y to y = z. In step 423, the selector 232 sets y to y = z/2 mod N. Hereinafter, steps 421, 422, 423 will collectively be referred to as step 420.

In step 430, the extraction circuit 240 determines solutions to the quadratic congruence expression x² = y(mod N) with respect to x, using y. Of the solutions which satisfy (x I p)(x | q) ≠ 1, the solution whose value is (N-1)/2 or less by x_{L}, and the solution whose value is (N+1)/2 or more is represented by x_{G}. If there is only one solution which satisfies (x I p)(x | q) ≠ 1 in step 430, then the solutions are x_{L} = x_{G} = 0.

In step 411, the selector 242 operates based on the product (C I p)(C | q) of the Jacobi symbols, outputted from the multiplier 213. If (C I p)(C I q) is -1, then control goes to step 443. Otherwise, control goes to step 442. In step 442, the selector 242 sets M to M = x_{L}. In step 443, the selector 242 sets M to M = x_{G}/2. Hereinafter, steps 441, 442, 443 will collectively be referred to as step 440.

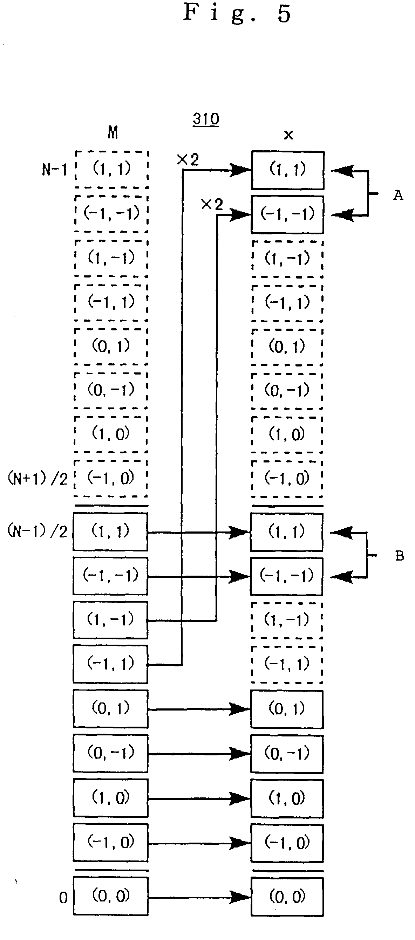

Fig. 5 is a diagram illustrative of a conversion carried out in step 310 shown in Fig. 3. In Fig. 5, sets of boxes that are vertically arranged on the left side represent sets of values that the plaintext M can take. To the sets where vectors (i,j) are indicated, there belong the values of the plaintext M where ((M | p),(M | q)) = (i,j).

To the first through eighth boxes counted from above, there belong the values of the plaintext M where M ≧ (N+1)/2. To the first through ninth boxes counted from below, there belong the values of the plaintext M where M ≦ (N-1)/2. The boxes represented by the dotted lines indicate that the values belonging to those boxes will not be used as a plaintext. The boxes represented by the solid lines indicate that the values belonging to those boxes can be used as a plaintext.

Sets of boxes that are vertically arranged on the right side represent sets of values that the output x from the selector 113 can take. These boxes are defined in the same manner as with the sets of values that the plaintext M can take. To the sets where vectors (i,j) are indicated, there belong the values of x where ((x | p),(x | q)) = (i,j).

If the value of the Jacobi symbol (M | N) is -1 with respect to the plaintext M in step 310, then x is set to x = 2M. Otherwise, x is set to x = M. As described above, the present embodiment uses a secret key where ((2 | p),(2 | q)) = (-1,1). In step 310, therefore, the sets where ((M | p),(M | q)) = (1,-1) and the sets where ((M | p),(M | q)) = (-1,1) are mapped respectively onto the sets where ((x | p),(x | q)) = (1,1) and the sets where ((x | p),(x | q)) = (-1,-1). The sets of other plaintexts are mapped directly onto the right sets.

As shown in Fig. 5, other sets will not be mapped onto the same single set. It can thus be seen that the conversion from M to x in step 310 is a one-to-one conversion. It should be noted that of the sets of the values of x where ((x | p),(x | q)) = (1,1) or ((x | p),(x | q)) = (-1,-1), with respect to x which is equal to or greater than (N+1)/2, as indicated by A, (M|N) = -1 is satisfied for M corresponding to x, with respect to x which is equal to or smaller than (N-1)/2, as indicated by B, (M|N) = 1 is satisfied for M corresponding to x.

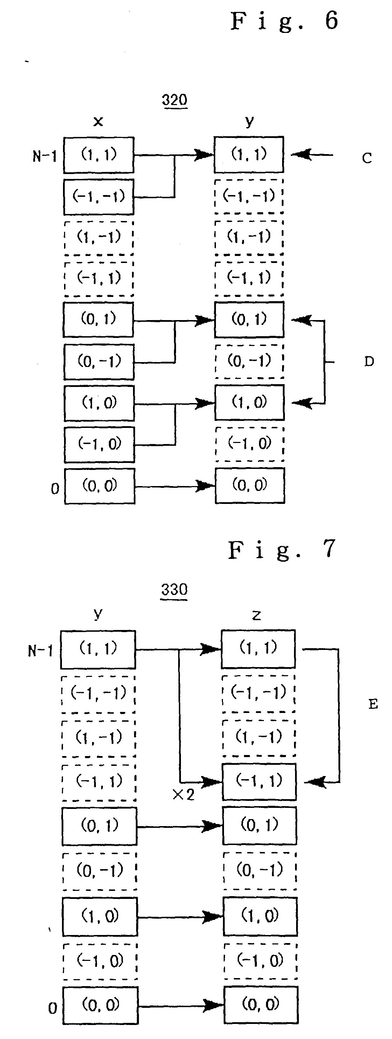

Fig. 6 is a diagram illustrative of a conversion carried out in step 320 shown in Fig. 3. In Fig. 6, sets of boxes that are vertically arranged on the left side represent sets of values that the output x from the selector 113 can take. To the sets where vectors (i,j) are indicated, there belong the values of x where ((x I p),(x I q)) = (i,j). The boxes represented by the dotted lines indicate that the values of x belonging to those boxes will not be used. The boxes represented by the solid lines indicate that the values of x belonging to those boxes can be used. Sets of boxes that are vertically arranged on the right side represent sets of values that the output y from the square circuit 120 can take. These boxes are defined in the same manner as with the set of values that x can take. To the sets where vectors (i,j) are indicated, there belong the values of y where ((y I p),(y I q)) = (i,j).

It should be noted that in Fig. 6, unlike Fig. 5, each of the sets contains values equal to or greater than (N+1)/2 and values equal to or smaller than (N-1)/2 except for the set (0,0). Since the conversion indicated by y = x² mod N is carried out in step 320, the values of (y I p) and (y I q) are 0 or 1, and cannot take -1. Therefore, except for the set corresponding to x = 0, i.e., the set (0,0), two sets on the side x are mapped onto a single set on the side y.

Of the sets on the side y, as indicated by D in Fig.6, two sets on the side x are superposed and mapped onto the sets (0,1), (1,0), but two values of x are not mapped onto the same value of y. This is because if one of (y I p) and (y I q) is 0, then the quadratic congruence expression x² = y(mod N) with respect to x can have two solutions at most, with one of the solutions being x₀ and the other N-x₀.

Specifically, if one of the solutions is equal to or smaller than (N-1)/2, then the other solution is equal to or greater than (N+1)/2. As can be seen from Fig. 5, only a value equal to or smaller than (N-1)/2 is used as a value of x corresponding to ((y | p),(y | q)) = (0,1),(1,0) in this embodiment. With respect to (1,1) of the sets on the side y, as indicated by C in Fig.6, two values of x are mapped onto the same value of y, and they can be distinguished with the value of (M I N), as can be understood from Fig. 5.

A value of x can be recovered from a value of y in Fig. 6 as follows:

Of the solutions to the quadratic congruence expression x² = y(mod N) with respect to x, a solution which satisfies (x | p)(x | q) ≠ -1 may be determined because, as shown in Fig. 5, the value of x where (x I p)(x | q) = -1, i.e., the value of x where (((x | p)(x | q)) = (-1,1),(1,-1), is not used. However, there are a maximum of two solutions which satisfies (x | p)(x | q) ≠ -1. Of those solutions, the solution whose value is equal to or smaller than (N-1)/2 will hereinafter be represented by x_{L}, and the solution whose value is equal to or greater than (N+1)/2 by x_{G}.

For y = 0, since there is only one solution of x = 0 to x² = y(mod N), x_{L} = x_{G} = 0. In order to recover an original value of x, it is necessary to identify which of these two solutions is the original value of x. As can be seen from Fig. 5, it can be identified with the value of (M I N). Specifically, if (M I N) = -1, then the original value of x is x_{G}, and otherwise, the original value of x is x_{L}.

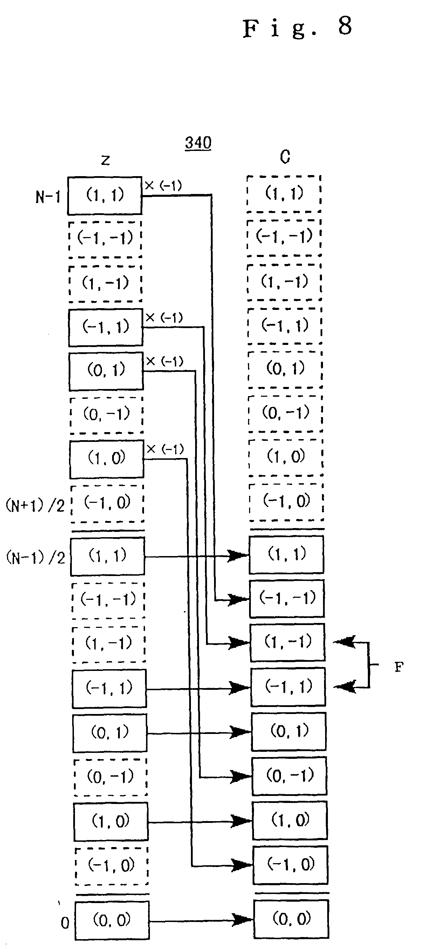

Fig. 7 is a diagram illustrative of a conversion carried out in step 330 shown in Fig. 3. In Fig. 7, sets of boxes that are vertically arranged on the left side represent sets of values that the output y from the square circuit 120 can take. To the sets where vectors (i,j) are indicated, there belong the values of y where ((x I p),(x I q)) = (i,j). The boxes represented by the dotted lines indicate that the values of y belonging to those boxes will not be used. The boxes represented by the solid lines indicate that the values of y belonging to those boxes can be used. Sets of boxes that are vertically arranged on the right side represent sets of values that the output z from the selector 132 can take. These boxes are defined in the same manner as with the set of values that y can take. To the sets where vectors (i,j) are indicated, there belong the values of z where ((y I p),(y I q)) = (i,j). If the value of the Jacobi symbol (M|N) is -1 with respect to y in step 330, then z is set to z = 2y(mod N) as indicated by E. Otherwise, z is set to z = y.

As described above, the present embodiment uses a secret key where ((2 | p),(2 | q)) = (-1,1). As shown in Fig. 7, y where ((y | p),(y | q)) = (1,1) is mapped onto z where ((z I p),(z | q)) = (-1,1) by being set to z = 2y(mod N). In Fig. 6, with respect to (1,1) of the sets on the side y, two values of x are superposed and mapped onto the same value of y. Through this operation, the superposed value of y is mapped onto two different values of x. As a result, it can be understood that x and y are held in a one-to-one correspondence.

Fig. 8 is a diagram illustrative of a conversion carried out in step 340 shown in Fig. 3. In Fig. 8, sets of boxes that are vertically arranged on the left side represent sets of values that the output z from the selector 132 can take. To the sets where vectors (i,j) are indicated, there belong the values of z where ((z I p),(z I q)) = (i,j). To the first through eighth boxes counted from above, there belong the values of z where z ≧ (N+1)/2. To the first through ninth boxes counted from below, there belong the values of z where z ≦ (N-1)/2. The boxes represented by the dotted lines indicate that the values belonging to those boxes will not be used as values of z. The boxes represented by the solid lines indicate that the values belonging to those boxes can be used as values of z. Sets of boxes that are vertically arranged on the right side represent sets of values that the output x from the selector 144, i.e., the ciphertext C, can take. These boxes are defined in the same manner as with the sets of values that the plaintext M can take. To the sets where vectors (i,j) are indicated, there belong the values of C where ((C | p),(C | q)) = (i,j).

In step 340, if z takes a value equal to or greater than (N+1)/2, then C is set to C = -z(mod N), and otherwise, C is set to C = z. Therefore, as shown in Fig. 8, the set of z which takes a value equal to or greater than (N+1)/2 and which is ((z|p)(z|q)) = (1,1), (-1,1), (0,1)(1,0) is mapped onto the set of C which takes a value equal to or greater than (N-1)/2 and which is ((C | p)(C | q)) = (-1,-1), (1,-1),(0,-1)(-1,0). The other set of z is mapped directly onto the right set of C. As indicated by F in Fig.8, only when C takes the values (1,-1), (-1,1), (C | p)(C | q)=-1 is satisfied. Only with respect to M corresponding to C, (M|N)=-1 is satisfied.

As can be see from Fig. 8, another set will not mapped onto the same single map. It can thus be seen that the conversion from z to C in step 340 is a one-to-one conversion. It can therefore be understood from the above description that the plaintext M and the ciphertext C are held in a one-to-one correspondence by the encrypting process according to the present invention.

For recovering the original plaintext M from the ciphertext C, a process which is a reversal of the above encrypting process may be basically carried out. However, the encrypting process is changed depending on whether or not the value of (MI N) and the value of z are equal to or greater than (N+1)/2. In the decrypting process, however, since the values of M and z are not known in advance, whether or not the value of (M I N) and the value of z are equal to or greater than (N+1)/2 must be determined from the ciphertext C.

A review of Fig. 5 through Fig. 8 indicates that (M|N) = (C I p)(C I q) is satisfied. The value of (M I N) can be determined from the ciphertext C based on this fact. It can also be seen from Fig. 8 that if s(C) = -1, then the value of z is equal to or greater than (N+1)/2. This fact is effective to decide whether the value of z is equal to or greater than (N+1)/2 from the ciphertext C.

s(C) is a value defined as s(C) = (C I p) if (C I q) = 0 and s(C) = (C | q) if (C | q) ≠ 0. Therefore, the decrypting device shown in Fig. 2 is capable of recovering an original plaintext from a ciphertext outputted from the encrypting device shown in Fig. 1, and the decrypting process shown in Fig. 4 is capable of recovering an original plaintext from a ciphertext produced by the encrypting process shown in Fig. 3.

While a preferred embodiment of the present invention has been described using specific terms, such description is for illustrative purposes only, and it is to be understood that changes and variations may be made without departing from the spirit or scope of the following claims.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A method of public-key cryptography with increased protection against selective ciphertext attack is disclosed. An encrypting device encrypts a plaintext M to generate a ciphertext C using a public key N having as a value the product pq of a first secret key p of a prime number whose Jacobi symbol (2 | p) is -1 and a second secret key q of a prime number whose Jacobi symbol (2 | q) is -1. A decrypting device decrypts the ciphertext C using the secret keys p, q and the public key N to recover the original plaintext N. Since x where (x | p)(x | q) =-1 is not used, digital signatures generated by the decrypting device can not be broken by selective ciphertext attacks.

## Claims

1. A method of encrypting a plaintext M to generate a ciphertext C using a public key N having as a value the product pq of a first secret key p of a prime number whose Jacobi symbol (2 | p) is -1 and a second secret key q of a prime number whose Jacobi symbol (2 | q) is 1, comprising the steps of:
calculating the value of a Jacobi symbol (M|N) of said plaintext M and said public key N;
setting an output x to a value 2M which is twice the value of said plaintext M if the value of the Jacobi symbol (M|N) is "-1" and setting an output x to said plaintext M if the value of the Jacobi symbol (M |N) is other than "-1";
calculating a remainder x² mod N produced when the square of said output x is divided by said public key N and setting an output y to the calculated remainder;
calculating 2y mod N which is a remainder when a multiple by 2 of said output y is divided by said public key N;
selecting the remainder 2y mod N as an output z if the value of the Jacobi symbol (M |N) is "-1" and setting an output z to said output y if the value of the Jacobi symbol (M|N) is other than "-1";
shifting said public key N by one bit to the right and calculating an output (N-1)/2 which is a value produced by shifting said public key N;
calculating -z mod N which is a remainder when a multiple by -1 of said output z is divided by said public key N; and
comparing said output (N-1)/2 and said output z with each other, selecting and outputting said output z as said ciphertext C if z ≦ (N-1)/2, and setting said ciphertext C to said remainder -z mod N if z > (N-1)/2.

2. A method of decrypting a ciphertext C which has been generated by encrypting a plaintext M using a public key N having as a value the product pq of a first secret key p of a prime number whose Jacobi symbol (2 | p) is -1 and a second secret key q of a prime number whose Jacobi symbol (2 | q) is 1, using said first and second secret keys p, q and said public key N to recover the plaintext M, comprising the steps of:
calculating the value of a Jacobi symbol (C I p) of said ciphertext C and said first secret key p;
calculating the value of a Jacobi symbol (C I q) of said ciphertext C and said second secret key q;
calculating the product (C I p)(C I q) of said Jacobi symbol (C I p) and said Jacobi symbol (C I q);
setting an output s(C) to said Jacobi symbol (C | p) if the value of said Jacobi symbol (C I q) is "0" and setting an output s(C) to said Jacobi symbol (C I q) if the value of said Jacobi symbol (C I q) is other than "0";
calculating -C mod N which is a remainder when a multiple by -1 of the value of said ciphertext C is divided by said public key N;
setting an output z to said remainder -C mod N if said output s(C) is "-1" and setting an output z to said ciphertext C if said output s(C) is other than "-1";
calculating z/2 mod N which is a remainder when a multiple by 1/2 of said output z is divided by said public key N;
setting an output y to said remainder z/2 mod N if the value of said product (C I p)(C I q) is "-1" and setting an output y to said output z if the value of said product (C I p)(C | q) is other than "-1";
outputting a solution which satisfies (x I p)(x I q) ≠ 1 and whose value is equal to or smaller than (N-1)/2 and a solution which satisfies (x I p)(x I q) ≠ 1 and whose value is equal to or greater than (N+1)/2, of the solutions to a quadratic congruence expression x² = y(mod N) with respect to x, as a first output x_{L} and a second output x_{G}, respectively, if said output y is other than "0", and outputting "0" as said first output x_{L} and said second output x_{G} if said output y is "0";
calculating a quotient x_{G}/2 produced when said second output x_{G} is divided by 2; and
selecting and outputting said quotient x_{G}/2 as the plaintext M if the value of said product (C I p)(C | q) is "-1" and selecting and outputting said first output x_{L} as the plaintext M if the value of said product (C I p)(C | q) is other than "-1".

3. A method of public-key cryptography, comprising the steps of:
encrypting a plaintext M into a ciphertext C using the method according to claim 1 and transmitting the ciphertext C; and
decrypting the transmitted ciphertext C to recover the plaintext M using the method according to claim 2.

4. An encrypting device for encrypting a plaintext M to generate a ciphertext C using a public key N having as a value the product pq of a first secret key p of a prime number whose Jacobi symbol (2 | p) is -1 and a second secret key q of a prime number whose Jacobi symbol (2 | q) is 1, comprising:
a Jacobi symbol calculating circuit for calculating the value of a Jacobi symbol (M|N) of said plaintext M and said public key N;
a first multiplier for doubling the value of said plaintext M and outputting a doubled result as an output 2M;
a first selector for selecting the output 2M from said first multiplier and outputting the selected output as an output x if the value of the Jacobi symbol (M|N) calculated by said Jacobi symbol calculating circuit is "-1" and selecting and outputting said plaintext M as an output x if the value of the Jacobi symbol (M|N) is other than "-1";
a square circuit for calculating a remainder x² mod N produced when the square of said output x from said first selector is divided by said public key N and outputting the calculated remainder as an output y;
a second multiplier for calculating a remainder 2y mod N produced when a multiple by 2 of said output y from said square circuit is divided by said public key N and outputting the calculated remainder;
a second selector for selecting and outputting the remainder 2y mod N as an output z if the value of the Jacobi symbol (M|N) calculated by said Jacobi symbol calculating circuit is "-1" and selecting and outputting the output y from said square circuit as an output z if the value of the Jacobi symbol (M|N) is other than "-1";
a shifter for shifting said public key N by one bit to the right and outputting an output (N-1)/2 which is a value produced by shifting said public key N;
a comparator for comparing the output (N-1)/2 from said shifter and the output z from said second selector with each other and outputting a compared result;
a third multiplier for calculating -z mod N which is a remainder when a multiple by -1 of said output z is divided by said public key N; and
a third selector for selecting and outputting said output z from said second selector as said ciphertext C if z ≦ (N-1)/2 as indicated by the compared result from said comparator, and selecting and outputting the output -z mod N from said third multiplier as said ciphertext C if z > (N-1)/2 as indicated by the compared result from said comparator.

5. A decrypting device for decrypting a ciphertext C which has been generated by encrypting a plaintext M using a public key N having as a value the product pq of a first secret key p of a prime number whose Jacobi symbol (2 | p) is -1 and a second secret key q of a prime number whose Jacobi symbol (2 | q) is 1, using said first and second secret keys p, q and said public key N to recover the plaintext M, comprising:
a first Jacobi symbol calculating circuit for calculating the value of a Jacobi symbol (C I p) of said ciphertext C and said first secret key p;
a second Jacobi symbol calculating circuit for calculating the value of a Jacobi symbol (C I q) of said ciphertext C and said second secret key q;
a first multiplier for calculating the product (C | p)(C | q) of said Jacobi symbol (C I p) calculated by said first Jacobi symbol calculating circuit and said Jacobi symbol (C I q) calculated by said second Jacobi symbol calculating circuit;
a first selector for selecting and outputting the Jacobi symbol (C | p) calculated by said first Jacobi symbol calculating circuit as an output s(C) if the Jacobi symbol (C I q) calculated by said second Jacobi symbol calculating circuit is "0" and selecting and outputting the Jacobi symbol (C I q) calculated by said second Jacobi symbol calculating circuit as an output s(C) if the Jacobi symbol (C I q) calculated by said second Jacobi symbol calculating circuit is other than "0";
a second multiplier for calculating -C mod N which is a remainder when a multiple by -1 of the value of said ciphertext C is divided by said public key N;
a second selector for selecting and outputting said remainder -C mod N calculated by said second multiplier as an output z if said output s(C) from said first selector is "-1" and selecting and outputting said ciphertext C as an output z if said output s(C) from said first selector is other than "-1";
a first divider for calculating z/2 mod N which is a remainder when a multiple by 1/2 of said output z from said second selector is divided by said public key N and outputting the calculated remainder;
a third selector for selecting and outputting said remainder z/2 mod N from said first divider as an output y if the value of said product (C I p)(C I q) calculated by said first multiplier is "-1" and selecting and outputting the output z from said second selector as an output y if the value of said product (C I p)(C I q) calculated by said first multiplier is other than "-1";
an extraction circuit for outputting a solution which satisfies (x I p)(x I q) ≠ 1 and whose value is equal to or smaller than (N-1)/2 and a solution which satisfies (x | p)(x | q) ≠ 1 and whose value is equal to or greater than (N+1)/2, of the solutions to a quadratic congruence expression x² = y(mod N) with respect to x, as a first output x_{L} and a second output x_{G}, respectively, if said output y from said third selector is other than "0", and outputting "0" as said first output x_{L} and said second output x_{G} if said output y from said third selector is "0";
a second divider for calculating a quotient x_{G}/2 produced when said second output x_{G} from said extraction circuit is divided by 2; and
a fourth selector for selecting and outputting said quotient x_{G}/2 as the plaintext M if the value of said product (C I p)(C I q) calculated by said first multiplier is "-1" and selecting and outputting said first output x_{L} as the plaintext M if the value of said product (C I p)(C I q) calculated by said first multiplier is other than "-1".

6. A system for public-key cryptography comprising:
an encrypting device according to claim 4; and
a decrypting device according to claim 5.
